# EUROPEAN PATENT APPLICATION

(11) **EP 4 198 979 A1**
(43) Date of publication of application: **21.06.2023**
(21) Application number: 22156829.8
(22) Date of filing: 15.02.2022
(51) Int. Cl.: G11B 7/24047, G11B 7/253, G11B 7/0045

(54) **ULTRA-THIN DATA CARRIER AND METHOD OF READ-OUT**

(30) Priority: 14.12.2021 EP 21214387
(71) Applicant: Ceramic Data Solutions GmbH, 4810 Gmunden (AT)
(72) Inventor: PFLAUM, Christian, 82347 Bernried (DE); KUNZE, Martin, 4810 Gmunden (AT)
(74) Representative: Vossius & Partner Patentanwälte Rechtsanwälte mbB

(57) **Abstract**

The present invention relates to an ultra-thin plastics data carrier for long-term data conservation and to a method of reading out such a data carrier.

## Description

The present invention relates to an ultra-thin data carrier and to a method of manufacturing such an ultra-thin data carrier.

It is estimated that, on average, humans generate about 2.5 quintillion bytes per day. While a large portion of said data may be generated for short-term use only, the demand for long-term data storage is increasing on a day by day basis. Apparently, state of the art data carriers such as flash, hard disc drives (HDD) and magnetic tape are far from ideal in terms of long-term storage. Thus, companies like Microsoft are currently exploring alternative techniques for alternative storage technologies (see, for example, the so-called "Project Silica" and US 10,719,239 B2).

A different technique for long-term storage of information has been described in WO 2021/028035 A1. Said technique is based on the use of a ceramic substrate coated with a layer of a different material and encoding information on said coated substrate by using, e.g., a laser in order to manipulate localized areas of said coated substrate. This technique has proven to allow for information storage which is highly resistant to moisture, electromagnetic fields, acidic and corrosive substances, etc. such that the encoded writable ceramic plate provides a durability which is unavailable from other commonly used information storage mediums. One potential disadvantage of said technique, though, is the use of rather voluminous ceramic plates having a thickness of about 1 mm. Accordingly, the data storage density per volume may not achieve data storage densities of currently used data carriers.

Accordingly, there is a need for further improvement of data carriers suitable for long-term use and storage.

The inventors of the present invention have now, surprisingly, realized that the techniques described in WO 2021/028035 A1 may be analogously employed on thin substrates made of certain plastics materials.

According to a first aspect, the present invention relates to a data carrier comprising a plastics substrate having first and second opposite surfaces and a thickness of at most 500 µm, preferably of at most 200 µm, more preferably of at most 150 µm, wherein the first surface of the substrate is coated with a first coating, the material of the first coating being different from the material of the substrate, wherein the first coating comprises a plurality of, preferably laser-ablated, recesses encoding information.

The information encoded by means of the plurality of recesses may be analog and/or digital information. For example, the plurality of recesses may, in conjunction, form an analog image, text, numbers or the like. Alternatively, the plurality of recesses may encode digital information similar to, for example, digital information encoded on a CD, DVD Blu-ray Disc or a data matrix code. In any case, the encoded information can preferably be decoded optically, either visually by the naked eye or with the help of suitable optics such as a microscope or the like or by means of an optical decoder.

These recesses are generated by means of a laser beam and may have various shapes and/or depths as described in great detail in WO 2022/002418 A1, which document is fully incorporated herein by reference, in particular with regard to any disclosure therein explaining in detail how to encode information by means of recess depth. In its most simple form of this first aspect, each recess has about the same depth and the optical decoder detects the difference between a substrate area without recess and a recess by measuring, for example, a phase difference or detecting changes in the reflectivity (if, for example, the substrate surface is polished and the bottom of the recess is curved or roughened). In order to minimally distort the thin coating material it is preferred that the recesses have a depth as small as possible, for example a depth of at most 100 nm, preferably of at most 50 nm and even more preferably of at most 30 nm. It is also preferred that the depth of each recess is smaller than 1%, preferably smaller than 0.1%, more preferably smaller than 0.05% of the thickness of the substrate.

In order to create well-defined recesses which may be easily detected it preferred that the recesses are generated by means of laser ablation utilizing a picosecond or a femtosecond pulse laser. Indeed, using such pulse lasers leads to cylindrical recesses without any molten material edges at the top circumference of each recess.

The material of the first coating may have different optical properties compared to the optical properties of the substrate. For example, if the material of the substrate exhibits a bright or white color, whereas the material of the first coating exhibits a dark or black color, ablating the material of the first coating so as to create recesses which extend all the way towards or even into the substrate will create a strong optical contrast between the overall surface of the first coating on the one hand and each of the recesses on the other hand. This contrast may be visible (e.g., for the naked eye) generating the impression of an image, text or the like or may provide a digital encoding (recess versus no recess) which may be easily and reliably decoded by an optical decoder.

However, in view of the envisaged long-term use of the data carrier of the present invention, one has to ascertain that the first coating remains reliably attached to the substrate, preferably even if the substrate is bent or wound up on a roll. Therefore, it is preferable to apply a rather thin coating layer having a thickness of at most 10 µm, preferably at most 1 µm, more preferably at most 200 nm, even more preferably at most 150 nm, even more preferably at most 100 nm, even more preferably at most 50 nm, even more preferably at most 30 nm and most preferably at most 20 nm. In terms of the optical effect to be achieved, e.g. by means of an optical contrast, it is sufficient to provide for a thickness which allows for substantial absorption, multiscattering, reflection, or the like.

In view of ease of the coating process and, in particular, the decoding / reading process it is preferred that the average roughness Ra of both the substrate surface and the coating surface is smaller than 10 nm, preferably smaller than 5 nm, more preferably smaller than 3 nm. Ra is the arithmetic average value of a filtered roughness profile determined from deviations about the center line along the evaluation length.

Since the first coating on the substrate may create strain in the data carrier, it may be beneficial to coat both surfaces of the substrate in order to achieve a symmetric strain. It is therefore preferred that the second surface of the substrate is coated with a second coating, the material of the second coating being different from the material of the substrate (and preferably identical to the material of the first coating). Of course, if a second coating is provided, said second coating may also be used to encode additional information, thus doubling the amount of data to be stored on the data carrier. Accordingly, it is preferred that the second coating also comprises a plurality of, preferably laser-ablated, recesses encoding information.

As mentioned above, the data carrier according to the first aspect allows for providing an optical contrast or another difference in an optical property between areas of unperturbed coating and areas with a recess. For this purpose, it is preferred that each recess in the first and/or second coating has a depth which is equal to or greater than the thickness of the respective coating. In other words, it is preferred that the coating material is substantially completely ablated (or evaporated or otherwise removed) at each recess in order to make the material of the substrate accessible for optical decoding (by, e.g., the naked eye, a microscope, a camera or a more sophisticated optical decoder or reading device). In this context, it would be ideal to exactly remove all coating material at a recess position without affecting the substrate. Yet, this may be difficult to reliably and reproducibly control. Accordingly, it may be preferable to control, e.g., the laser system used for ablation such that each recess in the first and/or second coating has a depth which is slightly greater than the thickness of the respective coating. For example, the ratio between the depth of each recess and the thickness of the respective coating may be in a range between 1.01 and 1.2, preferably between 1.01 and 1.1, more preferably between 1.02 and 1.05. Preferably, each recess extends into the substrate with a depth of at most 1 µm, preferably of at most 100 nm, more preferably of at most 50 nm, even more preferably of at most 30 nm, even more preferably of at most 20 nm and most preferably of at most 10 nm.

It may also be preferable that each recess in the first and/or second coating has a depth which is smaller than the thickness of the respective coating. For example, the depth of each recess may be optimized such that the recess never touches the substrate, while at the same time the bottom material below the recess of the respective coating is sufficiently thin that laser light of a specific wavelength may still, at least partly, transmit through said coating material and reach the material of the substrate in order to achieve the optical contrast discussed above. For this purpose, it is preferred that the ratio between the depth of each recess and the thickness of the respective coating is in a range between 0.9 and 0.99, preferably between 0.95 and 0.99, more preferably in a range between 0.97 and 0.99. Alternatively, each recess in the first and/or second coating may have a depth which is substantially smaller than the thickness of the respective coating. In this case, the substrate merely serves as a carrier substrate with the encoding and decoding taking place entirely with respect to the coating material only.

Preferably, the first and/or second coating comprises one or a combination of the following materials: Cr, Co, Ni, Fe, Al, Ti, Si, W, Zr, Ta, Th, Nb, Mn, Mg, Hf, Mo, V; a metal nitride such as CrN, CrAIN, TiN, TiCN, TiAIN, ZrN, AIN, VN, Si₃N₄, ThN, HfN, BN; a metal carbide such as TiC, CrC, Al₄C₃, VC, ZrC, HfC, ThC, B₄C, SiC; a metal oxide such as Al₂O₃, TiO₂, SiO₂, ZrO₂, ThO₂, MgO, Cr₂O₃, Zr₂O₃, V₂O₃; a metal boride such as TiB₂, ZrB₂, CrB₂, VB₂, SiB₆, ThB₂, HfB₂, WB₂, WB₄; or a metal silicide such as TiSi₂, ZrSi₂, MoSi₂, MoSi, WSi₂, PtSi, Mg₂Si.

Preferably, the substrate comprises or consists of one or a combination of the following materials: polycarbonate, polyethylene naphthalate, polyester, fluoroethylenepropylene, ethylene-propylene-copolymer, ethylene-tetrafluoroetheylene, perfluoroalkoxy polymer, polyetherimide, polyether sulfone, polyethylene terephthalate, polyimide, polymethypentene, polytetraluoroethylene, polyvinylidene fluoride.

Preferably, the substrate is transparent for at least one wavelength range within the visible spectrum, preferably over the entire visible spectrum, i.e. between 400 nm and 700 nm and/or within the UV spectrum, preferably over the entire UV spectrum, i.e. between 100 nm and 400 nm. Preferably, the substrate exhibits a transmittance of at least 80 %, preferably at least 90 % and more preferably at least 95 % for at least one wavelength range within the visible spectrum, preferably over the entire visible spectrum, i.e. between 400 nm and 700 nm and/or within the UV spectrum, preferably over the entire UV spectrum, i.e. between 100 nm and 400 nm.

The data carriers of the present invention may be provided in thin sheets, which may be stacked on top of each other. For example, each data carrier may be a circular, disc-like, rectangular, or quadratic sheet, for example a sheet of 10 cm x 10 cm. Such sheets may be easily handled during encoding and decoding and may be stacked on top of each other with, e.g., 50 or even 500 sheets forming one stack.

Alternatively, the data carrier may be an elongated film, which may be wound up in a roll. For this purpose, it is particularly advantageous if the substrate (and preferably the entire data carrier) has a Young's modulus of at most 80 GPa, preferably of at most 75 GPa. It is further preferred that the data carrier does not break at a radius of curvature of 100 mm, preferably 50 mm and more preferably 25 mm, and more preferably 10 mm, and more preferably 5 mm. and more preferably 2.5 mm. In order to achieve these mechanical properties, it is preferred to make the data carrier as thin as possible. Preferably, the thickness of the data carrier is at most 130 µm, more preferably at most 110 µm, even more preferably at most 100 µm, even more preferably at most 90 µm and most preferably at most 80 µm.

As discussed above, the recesses may have an arbitrary shape and may be elliptical, round, rectangular, square or the like. Different recesses of different shapes may be utilized to also encode information. However, in its most simple and straightforward approach, a plurality of essentially identical, substantially round recesses are generated by means of a laser beam, preferably using picosecond or femtosecond laser pulses. These recesses may be arranged in a regular pattern such as a rectangular, a square or a hexagonal pattern in order to encode digital information. Preferably, the diameter of said recesses is as small as possible, yet still sufficiently large that a proper decoding is possible. Preferably, each recess has a maximum extension perpendicular to its depth of at most 1 µm, preferably of at most 500 nm, more preferably of at most 300 nm, even more preferably of at most 200 nm and most preferably of at most 150 nm.

Preferably, the data carrier comprises at least 10 Megabytes of encoded information per cm² (per substrate surface), more preferably at least 100 Megabytes of encoded information per cm² and even more preferably at least 1 Gigabyte of information per cm².

The present invention further relates to a method of manufacturing a data carrier as described above. For manufacturing the data carrier according to the first aspect, a plastics substrate is provided, either or both surfaces of the substrate are coated with first and/or second coatings, and a plurality of recesses are generated in the first and/or second coatings, preferably by means of laser ablation, more preferably using picosecond or femtosecond laser pulses.

In order to achieve preferably cylindrical recesses, it is preferred to use a laser beam having a Gaussian or Bessel shape.

Coating either or both surfaces of the substrate with first and/or second coatings may be performed by various known techniques. Particularly preferred techniques are physical vapor deposition or chemical vapor deposition.

The substrate may be treated on either or both surfaces of the substrate with one or more of the following techniques: heating, sputtering, HiPIMS (High Power Impulse Magnetron Sputtering), applying forming gas such as nitrogen and/or hydrogen. These techniques may improve the surface quality of the substrate and/or may lead to a stronger bond between the substrate and the coating(s).

The substrate is preferably transparent to the wavelength of the laser light used for laser ablation and laser ablation is preferably performed with laser light transmitted through the substrate. Thus, any debris generated during ablation cannot affect the optics used for ablation because the data carrier forms a barrier between the ablated material and the optics. The present invention further relates to a method of reading out a data carrier as described above. According to the method, the data carrier of the first aspect is illuminated with light of a first wavelength. Light transmitted through the data carrier and/or reflected by the data carrier is detected and analyzed in order to decode the information encoded in the recesses of the data carrier. For example, light passing through the recesses and light being blocked at the data carrier wherever no recess is present (by, e.g., the in-transparent substrate or the in-transparent coating) may in combination generate a pattern (bright/dark) such as a QR code which may then be decoded using well-known techniques.

Preferably, the data carrier comprises a substrate and a coating with laser-ablated recesses on one surface of the substrate, wherein the substrate is transparent to the first wavelength and wherein light transmitted through the substrate is detected. This may happen both in transmission and reflection mode. In particular, the data carrier may preferably be illuminated through the substrate from the side opposite to the coating. Moreover, light originating from the recesses may also be detected through the substrate from the side opposite to the coating. This technique improves the signal-to-noise ratio because the side opposite to the coating with the recesses is typically cleaner and/or has a smoother surface facilitating imaging. With dust particles possibly being present on the side comprising the recesses it is particularly advantageous to illuminate from and detect on the opposite side with the illumination and/or detection focus being located at the bottom of the recesses in order to achieve a minimum effect from the dust (or other impurities) onto the optical beam.

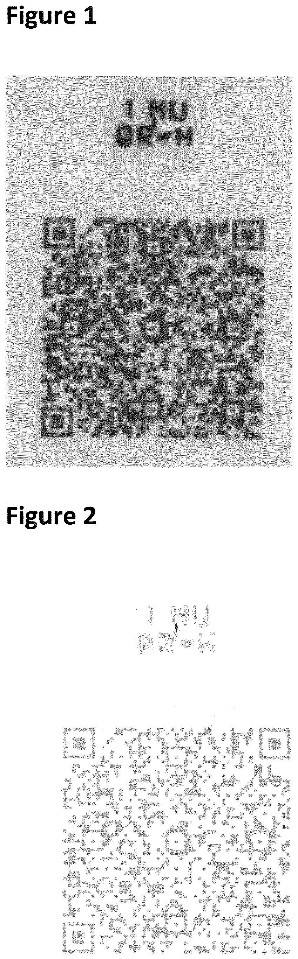

An example of the present invention is subsequently described with reference to the Figures, which show:
∘ Figure 1 a brightfield microscopy image of an exemplary data carrier at a magnification of 100×; and
∘ Figure 2 a backlight microscopy image of the exemplary data carrier at a magnification of 100×.

For the examples, a polycarbonate substrate having a size of 10 mm x 10 mm and a thickness of 500 µm was coated with a coating of CrN having a thickness of 100 nm by means of physical vapor deposition (PVD). Circular recesses having a diameter of about 1 µm were ablated from the coating using a 300 femtosecond laser at a wavelength of 514 nm.

The resulting data carrier was imaged with a Sensofar Sneox at a magnification of 100× from the front side and from the backside as shown in Figures 1 and 2, respectively.

As is evident from these Figures, it is possible to reliably and irreversibly create recesses in the coating so as to achieve a superb optical contrast between the material of the polycarbonate substrate (which is transparent) and the material of the coating layer (which is light absorbing). Moreover, the CrN coating reliably adhered to the polycarbonate substrate and could not be manipulated mechanically.

## Claims

1. A data carrier comprising a plastics substrate having first and second opposite surfaces and a thickness of at most 500 µm, wherein the first surface of the substrate is coated with a first coating, the material of the first coating being different from the material of the substrate, wherein the first coating comprises a plurality of laser-ablated recesses encoding information.

2. The data carrier of claim 1, wherein the thickness of the substrate is at most 200 µm, preferably at most 150 µm.

3. The data carrier of any of the preceding claims , wherein the second surface of the substrate is coated with a second coating, the material of the second coating being different from the material of the substrate, wherein the second coating comprises a plurality of laser-ablated recesses encoding information.

4. The data carrier of any of the preceding claims, wherein the thickness of the first and/or second coating is at most 10 µm, preferably at most 1 µm, more preferably at most 100 nm, even more preferably at most 50 nm.

5. The data carrier of any of the preceding claims, wherein each recess in the first and/or second coating has a depth of at most 10 µm, preferably at most 1 µm, more preferably at most 100 nm, even more preferably at most 50 nm.

6. The data carrier of any of the preceding claims, wherein each recess in the first and/or second coating has a depth which is smaller than the thickness of the respective coating; or wherein each recess in the first and/or second coating has a depth which is substantially equal to the thickness of the respective coating; or wherein each recess in the first and/or second coating has a depth which is greater than the thickness of the respective coating.

7. The data carrier of claim 6, wherein each recess extends into the substrate with a depth of at most 1 µm, preferably of at most 100 nm, more preferably of at most 50 nm.

8. The data carrier of any of the preceding claims, wherein the first and/or second coating comprises one or a combination of the following materials: a metal such as Cr, Co, Ni, Fe, Al, Ti, Si, W, Zr, Ta, Th, Nb, Mn, Mg, Hf, Mo, V; a metal nitride such as CrN, CrAIN, TiN, TiCN, TiAIN, ZrN, AIN, VN, Si₃N₄, ThN, HfN, BN; a metal carbide such as TiC, CrC, Al₄C₃, VC, ZrC, HfC, ThC, B₄C, SiC; a metal oxide such as Al₂O₃, TiO₂, SiO₂, ZrO₂, ThO₂, MgO, Cr₂O₃, Zr₂O₃, V₂O₃; a metal boride such as TiB₂, ZrB₂, CrB₂, VB₂, SiB₆, ThB₂, HfB₂, WB₂, WB₄; or a metal silicide such as TiSi₂, ZrSi₂, MoSi₂, MoSi, WSi₂, PtSi, Mg₂Si.

9. The data carrier of any of the preceding claims, wherein the substrate comprises one ora combination of the following materials: polycarbonate, polyethylene naphthalate, polyester, fluoroethylenepropylene, ethylene-propylene-copolymer, ethylene-tetrafluoroetheylene, perfluoroalkoxy polymer, polyetherimide, polyether sulfone, polyethylene terephthalate, polyimide, polymethypentene, polytetraluoroethylene, polyvinylidene fluoride.

10. The data carrier of any of the preceding claims, wherein the data carrier is wound up in a roll.

11. A method of manufacturing a data carrier of any of the preceding claims, the method comprising the following steps:
providing a plastics substrate;
coating either or both surfaces of the substrate with first and/or second coatings; and
generating a plurality of recesses in the first and/or second coatings by means of laser ablation.

12. The method of claim 11, wherein the substrate is transparent to the wavelength of the laser light used for laser ablation and wherein laser ablation is performed with laser light transmitted through the substrate.

13. A method of reading out a data carrier of any of claims 1 to 10, the method comprising the following steps:
illuminating the data carrier with light of a first wavelength;
detecting light transmitted through the data carrier and/or reflected by the data carrier; and
analyzing the detected light in order to decode the information encoded in the recesses of the data carrier.

14. The method of claim 13, wherein the data carrier comprises a plastics substrate and a coating with laser-ablated recesses on one surface of the substrate, wherein the substrate is transparent to the first wavelength and wherein light transmitted through the substrate is detected.

15. The method of claim 14, wherein the data carrier is illuminated from the side opposite to the coating and/or wherein light reflected by the data carrier is detected on the side opposite to the coating.
